Europäisches Patentamt

European Patent Office

Office européen des brevets

(11) Numéro de publication : **0 006 369 B1**

(12) **FASCICULE DE BREVET EUROPÉEN**

(51) Int. Cl.³ : **A 23 L 3/00**, A 23 L 3/02, A 23 L 3/16, A 23 L 3/36, A 61 L 2/06, A 61 L 2/20

(45) Date de publication du fascicule du brevet : **15.08.84**

(21) Numéro de dépôt : **79400307.9**

(22) Date de dépôt : **16.05.79**

(54) **Procédé pour le traitement thermique en continu de produits en vrac, nus, préemballés ou emballés.**

(30) Priorité : **17.05.78 FR 7814549**

(43) Date de publication de la demande : **09.01.80 Bulletin 80/01**

(45) Mention de la délivrance du brevet : **15.08.84 Bulletin 84/33**

(84) Etats contractants désignés : **BE CH DE GB IT LU NL SE**

(56) Documents cités :
**BE-A- 448 635**
**FR-A- 155 070**
**FR-A- 887 518**
**FR-A- 940 097**
**FR-A- 980 077**
**FR-A- 1 370 360**
**FR-A- 1 574 817**
**FR-A- 1 600 886**
**FR-A- 2 282 815**
**FR-A- 2 326 869**
**GB-A- 814 524**
**NL-A- 7 710 692**
**US-A- 2 163 628**
**US-A- 3 741 563**
**US-A- 3 911 156**
**US-A- 3 966 980**

(73) Titulaire : **Kibleur, Pierre Paul Maurice**
**20, rue Dupont-de-l'Eure**
**F-75020 Paris (FR)**

**Blaizat, Claude Antoine**
**103, Avenue de la Marne**
**F-92600 Asnieres (FR)**

(72) Inventeur : **Kibleur, Pierre Paul Maurice**
**20, rue Dupont-de-l'Eure**
**F-75020 Paris (FR)**
Inventeur : **Blaizat, Claude Antoine**
**103, Avenue de la Marne**
**F-92600 Asnieres (FR)**

(74) Mandataire : **Derambure, Christian**
**Cabinet BUGNION ASSOCIES SARL 116, boulevard Haussmann**
**F-75008 Paris (FR)**

Jouve, 18, rue St-Denis, 75001 Paris, France

## Description

La présente invention concerne un nouveau procédé pour le traitement thermique en continu, notamment pour la stérilisation, la pasteurisation ou le simple chauffage d'un produit en vrac, suivis ou non d'un refroidissement immédiat, ces opérations ayant lieu dans un même caisson étanche évitant toute contamination extérieure.

On sait que, pour surgeler la plupart des légumes, un blanchiment préalable est nécessaire. Il réduit l'activité enzymatique et stérilise le produit. Cette opération est généralement réalisée dans des « blancheurs » à eau chaude ou à vapeur. Un pré-refroidissement se fait ensuite, soit dans l'air, soit avec de l'eau pendant le convoyage des produits vers les systèmes de refroidissement.

On sait en outre que, pour les viandes (quartiers, muscles débités, poulets, viandes hachées, etc), il n'y a pratiquement aucune stérilisation ou pasteurisation hormis des rinçages à l'eau, ou un essuyage. Les normes de bonne conservation ne sont obtenues que par une mise sous froid très rapide, d'où l'emploi de puissances frigorifiques disproportionnées.

On sait encore que, pour le plumage des poulets, il faut amener les produits à une température de l'ordre de 50 à 55 °C facilitant l'enlèvement des plumes dans les moyens mécaniques. Ce chauffage est fait par trempage dans un bac d'eau chaude, véritable bouillon de culture, produisant une quantité important d'eau fortement polluée et assurant la transmission des germes microbiens d'une volaille à l'autre.

On connaît un procédé de stérilisation par autoclave (brevet français n° 1 370 360). Ce procédé consiste à mettre l'autoclave sous pression en y vaporisant une certaine quantité d'eau introduite dans l'autoclave et en mettant ensuite l'autoclave en dépression en évacuant l'eau, la vapeur d'eau et la majeure partie de l'air s'y trouvant puis à mettre à nouveau l'autoclave sous pression pour la stérilisation en y vaporisant une certaine quantité d'eau.

On connaît aussi un procédé de conservation de produits alimentaires (brevet français n° 1 550 070) dans lequel une matière sous forme de gaz ou de vapeur est mise sous vide au contact avec le produit à traiter.

Cependant, ces procédés ne permettent pas un traitement thermique satisfaisant de produits qui peuvent être emballés.

L'invention concerne donc un procédé permettant d'obtenir, en continu et sans transvasement, le chauffage, la pasteurisation, la stérilisation, le blanchiment, suivi ou non du refroidissement du produit, sans contamination bactérienne ou fongique.

L'invention concerne un procédé pour le traitement thermique en continu, notamment pour la pasteurisation, la stérilisation, le blanchiment avec ou sans refroidissement subséquent de produits en vrac nus, préemballés ou emballés tels que des végétaux, viande, volaille ou autres produits alimentaires, ce procédé étant caractérisé par le fait que l'on effectue les étapes successives suivantes :

— on chauffe les parois d'un caisson étanche à une température $\theta_1$ déterminée supérieure ou au moins égale à celle à atteindre sur les produits et comprise entre 30 et 150 °C,

— on introduit les produits dans le caisson,

— on fait le vide à l'intérieur du caisson à une pression de 133,3 à 3,99 · 10³ (1 et 30) mmHg de pression partielle d'air,

— on introduit à l'intérieur du caisson de la vapeur surchauffée, à une pression partielle inférieure à la pression atmosphérique,

— on règle la pression régnant à l'intérieur du caisson pour obtenir sur les produits une température $\theta_2$ déterminée inférieure à la température $\theta_1$ des parois du caisson.

Suivant l'invention, on maintient la pression à l'intérieur du caisson au-dessous de la pression atmosphérique pendant un temps suffisant pour obtenir la température nécessaire au traitement voulu, de préférence pendant 30 à 40 minutes.

Par cassage du vide, on revient à une pression finale à la pression atmosphérique.

Selon une autre variante de l'invention, on effectue un refroidissement postérieurement au traitement voulu, par une seconde mise sous vide dans le caisson pour obtenir une pression comprise entre environ 13,3 et 133,3 Pa (0,1 et 1 mm de Hg) et une température comprise de préférence entre − 20 et 15 °C.

Enfin, on compense la perte de poids des produits du fait de l'évaporation de l'eau dû au refroidissement sous vide à une température inférieure à 0 °C par de l'eau de condensation de la vapeur si le produit doit être sorti à la même température que sa température d'introduction, ou par une légère pulvérisation d'eau distillée, si la température à obtenir est inférieure à la température d'introduction.

Suivant une caractéristique de l'invention, on utilise pour l'opération de chauffage, de cuisson ou de stérilisation, de la vapeur d'eau, d'alcools, d'éthers.

Le but essentiel de l'invention consiste à condenser sur les produits alimentaires, contenus dans un caisson étanche et pouvant être chauffé de la vapeur surchauffée qui se fixe précisément sur les produits, du fait que les parois du caisson sont portées à une température au moins égale à celle à atteindre sur les produits.

Le procédé est caractérisé par les étapes suivantes :

1. Les produits sont donc placés dans un caisson étanche dont les parois peuvent être portées à une température comprise entre 30 et 150 °C. L'épaisseur et la résistance de ces parois sont calculés pour résister aux fortes pressions internes ou externes.

2. Le cycle de pressions peut être le suivant :
— mise sous vide jusqu'à une pression de 133,3 à 3 999 Pa (1 à 30 mmHg) de pression partielle d'air sans maintenir cette pression ;

— remise sous pression entre 3 999 à 0,98 10$^5$ (30 mmHg et 1 kg/cm$^2$) Pa par introduction de vapeurs d'eau ou autres (alcools, éthers) ;

— sortie du produit, s'il ne s'agit que d'un chauffage ;

— remise sous vide suivant un programme déterminé et maintien de la pression finale jusqu'à obtention de la température désirée si le produit doit subir un refroidissement.

3. Le cycle des températures sera fonction du cycle des pressions, soit :

— première phase : pas de changement notable de température,

— seconde phase : montée en température par condensation de la vapeur sur les produits (pas de condensation sur les parois puisqu'elles sont maintenues chaudes), le maintien de la température étant obtenu par la régulation de la pression,

— troisième phase : descente en température par remise sous vide de l'enceinte à la pression finale nécessaire. La pression est aussi, pour cette opération, la principale grandeur servant à la régulation de température.

4. Les produits sortis de l'enceinte sont maintenus dans un milieu aseptique par utilisation de membrane semi-perméable ou par les moyens traditionnels.

La mise en œuvre du procédé de l'invention amène naturellement à introduire des variantes correspondant à une plus grande commodité d'emploi. Celles-ci sont du domaine du technicien et n'affectent en rien le domaine de l'invention.

Avantageusement, on utilisera les principaux dispositifs suivants :

L'enceinte peut être construite selon deux modes de construction différents suivant que le programme de pression est inférieur ou supérieur à 0,98 · 10$^5$ Pa (1 kg/cm$^2$) ce qui correspond à l'obtention de températures supérieures ou inférieures à 100 °C.

— Supérieures à 100 °C : construction suivant la technique utilisée pour la fabrication d'étuves hautes pressions, mais munies de joints permettant la mise sous vide ;

— Inférieures à 100 °C : construction suivant la technique utilisée pour les enceintes sous vide dont les parois sont chauffées.

Dans les deux cas, les parois sont chauffées. Les systèmes de chauffage sont de la compétence du technicien ; il y aura intérêt à utiliser des serpentins d'eau chaude car tous les moyens d'obtention du vide ou du froid fournissent de grandes quantités d'eau à température moyenne. Le bilan énergétique des installations s'en trouvera amélioré d'autant.

Le dispositif de mise sous vide peut être réalisé de deux façons différentes :

— Pompes mécaniques pour l'extraction des incondensables et pompage de la vapeur sur des parois froides maintenues en température par des systèmes traditionnels.

— Pompage de la vapeur et des incondensables par des éjecteurs à vapeur d'eau.

Ces deux types d'installations sont couramment utilisés dans les installations de refroidissement par le vide.

La mesure de pression a une grande importance. On aura intérêt à utiliser des appareils permettant de mesurer la pression totale et absolue. Ce type de jauge est souvent réalisé avec des membranes pressostatiques comportant une pression de référence et une mesure de déplacement par transformateur linéaire différentiel.

La mesure de pression partielle d'air est réalisée avec un appareil semblable mais la canalisation le reliant à l'enceinte est munie d'une vanne. Une surface froide à une température de − 20 °C permet de négliger la pression de vapeurs condensable et donc de déterminer la pression partielle d'incondensable à cette température.

Plusieurs programmes de pression sont possibles. Pour obtenir une bonne vitesse de descente en température, on a intérêt à utiliser la méthode suivante : pour amener le produit à 0 °C, il faut effectuer un palier de pression entre 6,13 · 10$^2$ et 6,66 · 10$^2$ Pa (4,6 et 5 mmHg) si le produit doit être amené à une température inférieure à 0 °C, il y a intérêt à effectuer un palier à 0 °C, quand la surface d'évaporation est à l'état de glace, la vitesse de refroidissement est plus faible.

Exemples

1. Pommes de terre précuites.

Une tonne de pommes de terre préalablement pelées et découpées en morceaux pour ventes ou utilisation directe par le public sont introduites dans la machine. La pression partielle d'air est amenée à 3 mmHg en utilisant les éjecteurs à vapeur. La cuisson est faite en introduisant de la vapeur jusqu'à une pression de 9,86 · 10$^4$ Pa (740 mmHg). Les parois étaient préalablement mises à une température de 110 °C. Pour de petits morceaux (de 10 à 20 mm), le temps de cuisson est de vingt minutes. L'introduction de vapeur est stoppée, et les pompes à vide sont remises en fonctionnement. Pour plus de commodités, l'enceinte est remise à une température voisine de l'ambiante. La régulation de pression est réglée sur 6,13 · 10$^2$ à 6,66 · 10$^2$ Pa (4,6 à 5 mmHg) ; après un palier à cette pression de 30 minutes, la température des pommes de terre est de 1 °C dans la masse. Le bilan de poids est particulièrement intéressant ; la cuisson étant obtenue par condensation de vapeur, le refroidissement ne fait évaporer que la quantité d'eau ajoutée pendant la phase de chauffage. A 1 ou 2 % près, on retrouve le même poids de produit à la sortie du tunnel.

2. Blanchiment des petits pois.

Les petits pois, après avoir été soigneusement débarrassés de la poussière et des autres impuretés, sont introduits dans le tunnel. Le cycle est identique à celui fait pour la pomme de terre, seule la température de sortie peut être différente, 1 °C si le produit est destiné à la surgélation dans des tunnels classiques, 20 à 30 °C si le produit est destiné à l'appertisation.

3. Blanchiment suivi de la surgélation de petits pois, d'haricots verts, de pommes de terre frites, de choux fleurs en morceaux, maïs en grain, épinards, artichauts (fonds), aubergines, carottes en morceaux, cerises, courgettes, morceaux de fruits, marrons.

Les produits sont introduits dans l'enceinte après avoir été préparés de façon à ne plus avoir à être modifiés dans leur présentation pour l'utilisation ultérieure. Si l'emballage supporte la température de blanchiment et, s'il est suffisamment ouvert ou perforé pendant l'opération, les produits peuvent être emballés ou pré-emballés. Les opérations se déroulent de la même façon que pour l'exemple 1. Après le cycle de blanchiment identique à celui réalisé pour les pommes de terre quand les produits sont à une température de 1 °C, la pression est descendue entre 13,3 et 66,6 Pa (0,1 et 0,5 mmHg) et la surgélation du produit s'effectue.

La température du produit sera comprise entre − 20 et − 15 °C après un temps de maintien de l'ordre de 40 minutes pour les pommes de terre frites et les haricots verts. Le temps de maintien nécessaire varie entre 30 et 90 minutes suivant la structure du produit et des dimensions des morceaux. Le bilan de poids est particulièrement intéressant car le départ d'eau supplémentaire dû au refroidissement à une température inférieure à 0 °C peut être compensé par l'eau de lavage ou par une pulvérisation effectuée dans le caisson.

4. Echaudage de volailles avant plumage.

Le caisson est maintenu à une température de 60 °C. Les volailles sont introduites immédiatement après l'abattage des animaux. La pression partielle d'air est descendue vers $3,99 \cdot 10^2$ Pa (3 mmHg), elle est mesurée avec une précision de l'ordre de $1,33 \cdot 10^2$ Pa (1 mmHg). La vapeur d'eau est introduite dans l'enceinte jusqu'à une pression comprise entre $1,33 \cdot 10^4$ et $1,99 \cdot 10^4$ Pa (100 et 150 mmHg) en fonction de la température optimum à atteindre sur les corps. Les volailles sont ensuite évacuées vers les plumeuses. Un couloir à surfaces chaudes est placé entre le caisson et la plumeuse pour éviter un trop grand refroidissement des corps.

L'emploi de ce procédé évite la contamination bactérienne d'une volaille par l'autre. Il n'y a pas de production importante d'eau polluée, la plume reste pratiquement sèche.

5. Stérilisation de surface de la viande et conservation à l'abri de contamination extérieure.

Le procédé s'applique essentiellement sur les viandes désossées, sur des volailles après éviscération, mais peut aussi s'appliquer sur des carcasses entières de grands animaux. En règle générale, pour assurer une bonne conservation de la viande, il faut que la surface soit la plus stérile possible avant son entreposage au froid ; le procédé selon l'invention permet d'obtenir ce résultat. Son application suit le mode opératoire suivant : les parois du caisson sont maintenues à une température de 100 °C minimum, les viandes à traiter sont introduites, une pression partielle d'air comprise entre $3,99 \cdot 10^2$ et $3,99 \cdot 10^3$ Pa (3 et 30 mmHg) est réalisée, l'introduction de vapeur est faite jusqu'à une pression comprise entre $5,33 \cdot 10^4$ et $10^5$ Pa (400 et 750 mmHg) avec une possibilité de débit important, car il faut monter rapidement la température de surface sans avoir de phénomène de cuisson, on descend ensuite la pression du caisson et l'on effectue un palier à une pression pendant une durée fonction de la température que l'on veut atteindre. Pour certaines applications, il est nécessaire de remplacer la vapeur d'eau par des vapeurs assurant conjointement à un réchauffage une stérilisation chimique, par exemple vapeurs d'alcools, d'éthers. Pour assurer l'impossibilité de contaminations extérieures (fongiques ou bactériennes), il est commode de procéder comme suit : à la sortie ou mieux, dans l'enceinte après avoir cassé le vide avec un gaz soigneusement stérilisé, on enferme les viandes dans des enceintes étanches, souples ou rigides dont l'atmosphère interne sera celle de l'air, mais sera assurée au travers d'une membrane semi-perméable en élastomère silicone identique à celle utilisée dans le brevet français n° 1 567 996, les surfaces de membranes dans cette utilisation étant de l'ordre de 2 à 5 dm² pour 100 kg. Ce dernier procédé est particulièrement intéressant si l'on ne peut être sûr de la qualité des désinfections des matériels de transport.

Bien entendu, l'invention n'est pas limitée aux exemples de réalisation ci-dessus décrits.

**Revendications**

1. Procédé pour le traitement thermique en continu, notamment pour la précussion, la pasteurisation, la stérilisation, le blanchiment de produits en vrac, nus, préemballés ou emballés, tels que des produits alimentaires ou non, caractérisé par le fait que l'on effectue les étapes successives suivantes :

— on chauffe les parois d'un caisson étanche à une température de $\theta_1$ déterminée, supérieure à celle à atteindre sur les produits et comprise entre 30 et 150 °C,

— on introduit les produits dans le caisson,

— on fait le vide à l'intérieur du caisson à une pression de 1 et 30 mmHg de pression partielle d'air,

— on introduit à l'intérieur du caisson de la vapeur surchauffée, à une pression partielle inférieure à la pression atsmosphérique,

— on règle la pression régnant à l'intérieur du caisson pour obtenir sur les produits une température $\theta_2$ déterminée inférieure à la température $\theta_1$ des parois du caisson.

2. Procédé selon la revendication 1, caractérisé par le fait que l'on maintient la pression à l'intérieur du caisson au-dessous de la pression atmosphérique pendant un temps suffisant pour obtenir la température nécessaire au traitement voulu, de préférence pendant 30 à 40 minutes.

3. Procédé selon la revendication 1, caractérisé par le fait que par cassage du vide on revient à une pression finale d'approximativement $10^5$ Pa.

4. Procédé selon la revendication 1, caractérisé par le fait qu'on effectue un refroidissement postérieurement au traitement voulu par une seconde mise sous vide dans le caisson pour obtenir une pression comprise entre environ 0,1 et 1 mmHg et une température comprise de préférence entre − 20 et − 15 °C.

5. Procédé selon la revendication 1, caractérisé par le fait que l'on utilise de la vapeur d'eau ou des alcools ou éthers sous forme de vapeur.

6. Procédé selon la revendication 4, caractérisé en ce que l'on compense la perte de poids des produits du fait de l'évaporation de l'eau dû au refroidissement sous vide à une température inférieure à 0 °C par de l'eau de condensation de la vapeur si le produit doit être sorti à la même température que sa température d'introduction, ou par une légère pulvérisation d'eau distillée, si la température à obtenir est inférieure à la température d'introduction.

7. Procédé selon la revendication 1, caractérisé en ce que l'on enferme les produits (après cassage du vide), dans des enveloppes étanches dont l'atmosphère interne est constituée par de l'air, préalablemennt filtré, au travers d'une fenêtre en élastomère siliconné.

## Claims

1. A method for the continuous heat treatment, in particular for the precooking, pasteurisation, sterilisation, and blanching of bulk, unwrapped, pre-packed or packed products, such as food products or non-food products, characterised in that the following successive steps are carried out :

the walls of a tight container are heated to a specific temperature $\theta_1$, which is greater than that to be reached on the products and is between 30 and 150 °C, the products are introduced into the container, a vacuum is produced in the interior of the container at a pressure of 1 to 30 mmHg partial air pressure, superheated steam is introduced into the interior of the container at a partial pressure less than atmospheric pressure, the pressure in the interior of the container is regulated in order to obtain on the products a specific temperature $\theta_2$, lower than the temperature $\theta_1$ of the walls of the container.

2. A method according to Claim 1, characterised in that the pressure in the interior of the container is maintained below atmospheric pressure for a sufficient period of time to obtain the température necessary for the desired treatment, preferably for 30 to 40 minutes.

3. A method according to Claim 1, characterised in that by breaking the vacuum a final pressure of approximately $10^5$ Pa is again reached.

4. A method according to Claim 1, characterised in that cooling is carried out subsequent to the desired treatment by producing a vacuum a second time in the container in order to obtain a pressure between approximately 0.1 and 1 mmHg and a temperature preferably between − 20 and + 15 °C.

5. A method according to Claim 1, characterised in that water vapour or alcohols or ethers in the form of vapour are used.

6. A method according to Claim 4, characterised in that the weight loss of the products is compensated by the evaporation of the water as a result of cooling under a vacuum at a temperature lower than 0 °C by water condensation of the vapour if the product has to be removed at the same temperature as its introduction temperature, or by fine atomisation of distilled water, if the temperature to be obtained is lower than the introduction temperature.

7. A method according to Claim 1, characterised in that the products are enclosed (after breaking the vacuum) in tight casings whose inner atmosphere consists of air which has been previously filtered through a window made of a silicone elastomer.

## Ansprüche

1. Verfahren zur kontinuierlichen Wärmebehandlung insbesondere zum Vorgaren, Pasteurisieren, Sterilisieren, Bleichen von Massenartikeln, die unverpackt, vorverpackt oder verpackt sind, wie Lebensmittel oder dgl., gekennzeichnet durch folgende Schritte :
— Aufwärmen der Wände eines luftdichten Behälters auf eine bestimmte Temperatur $\theta_1$, die zwischen 30 und 150 °C liegt, die höher ist als diejenige, die auf die Artikel einwirkt ;
— Einbringen der Artikel in den Behälter ;
— Der Innenraum des Behälters wird auf einen Partialdruck von 1 bis 30 mmHg gebracht ;
— Einbringen von überhiztem Dampf in das Innere des Behälters, mit einem Druck, der etwas unter dem atmosphärischen Druck liegt ;
— Regeln des im Innenraum des Behälters herschenden Druckes, um auf den Artikeln eine bestimmte Temperatur $\theta_2$ zu erhalten, die niedriger ist als die Temperatur $\theta_1$ der Wände des Behälters.

2. Verfahren nach Anspruch 1, dadurch gekennzeichnet, daß der Druck im Inneren des Behälters während einer Zeitdauer, vorzugsweise zwischen 30 und 40 Minuten, die ausreichend ist, um die Temperatur für die gewünschte Behandlung zu erreichen, unterhalb des atmosphärischen Druckes gehalten wird.

3. Verfahren nach Anspruch 1, dadurch gekennzeichnet, daß man durch Zusammenbrechen des Vakuums zu einem Enddruck von annähernd $10^5$ Pa zurückkehrt.

4. Verfahren nach Anspruch 1, dadurch gekennzeichnet, daß nach der gewünschten Behandlung unter Vakuum eine Abkühlung während einer Sekunde in dem Behälter bewirkt wird, um einen Druck zwischen 0,1 und 1 mmHg und eine Temperatur vorzugsweise zwischen − 20 °C und + 15 °C zu erhalten.

5. Verfahren nach Anspruch 1, dadurch gekennzeichnet, daß man Wasserdampf, Alkohole oder Äther in Dampfform anwendet.

6. Verfahren nach Anspruch 4, dadurch gekennzeichnet, daß der Gewichtsverlust der Artikel durch Verdampfen von Wasser aufgrund des Abkühlens unter Vakuum auf eine Temperatur unter 0 °C entweder durch Kondenswasser, sofern der Artikel bei derselben Temperatur herausgenommen wird wie er hineingegeben wurde oder durch eine geringe Bestäubung mit destilliertem Wasser, wenn die Temperatur, die erhalten wird, unterhalb der Temperatur der Einbringung liegt, kompensiert wird.

7. Verfahren nach Anspruch 1, dadurch gekennzeichnet, daß man die Artikel (nach Zusammenbruch des Vakuums) in luftdichte Umhüllungen einschließt, deren innere Atmosphäre durch Luft gebildet wird, die zuvor durch ein Fenster aus einem Silikon-Elastomeren gefiltert wurde.